# FASCICULE DE BREVET EUROPEEN

(11) **EP 1 899 506 B1**
(45) Date de publication et mention de la délivrance du brevet: **31.12.2008**
(21) Numéro de dépôt: 06764735.4
(22) Date de dépôt: 06.06.2006
(51) Int. Cl.: C25D 5/02, B01L 3/00, B01J 19/00

(54) **PROCÉDÉ DE REALISATION D'UNE ZONE HYDROPHILE SUR UN SUBSTRAT HYDROPHOBE, PAR VOIE ÉLECTROCHIMIQUE**
VERFAHREN ZUR ELEKTROCHEMISCHEN HERSTELLUNG EINES HYDROPHILEN BEREICHS AUF EINEM HYDROPHOBEN SUBSTRAT
METHOD FOR ELECTROCHEMICALLY REALIZING A HYDROPHILIC AREA ON A HYDROPHOBIC SUBSTRATE

(30) Priorité: 06.06.2005 FR 0505704
(43) Date de publication de la demande: 19.03.2008
(73) Titulaire: Centre National de la Recherche Scientifique, 75016 Paris (FR)
(72) Inventeur: COMBELLAS, Catherine, F-75005 Paris (FR); KANOUFI, Frédéric, F-94300 Vincennes (FR); FUCHS, Adrien, F-75013 Paris (FR)
(74) Mandataire: Sueur, Yvette
(86) Numéro de dépôt international: PCT/FR2006/001270
(87) Numéro de publication internationale: WO 2006/131633

(56) Documents cités:
- US-B1- 6 221 227
- BOITTIAUX V ET AL: "Surface modification of halogenated polymers - 3. Influence of additives such as alkali cations or nucleophiles on the magnesium reductive treatment of polytetrafluoroethylene" POLYMER, ELSEVIER SCIENCE PUBLISHERS B.V, GB, vol. 40, no. 8, avril 1999 (1999-04), pages 2011-2026, XP004151633 ISSN: 0032-3861
- COMBELLAS C ET AL: "Surface modification of halogenated polymers. 4. Functionalisation of poly(tetrafluoroethylene) surfaces by diazonium salts" POLYMER, ELSEVIER SCIENCE PUBLISHERS B.V, GB, vol. 44, no. 1, janvier 2003 (2003-01), pages 19-24, XP004394466 ISSN: 0032-3861 cité dans la demande
- COMBELLAS C ET AL: "Surface modification of halogenated polymers. 6. Graft copolymerization of poly(tetrafluoroethylene) surfaces by polyacrylic acid" POLYMER, ELSEVIER SCIENCE PUBLISHERS B.V, GB, vol. 45, no. 14, juin 2004 (2004-06), pages 4669-4675, XP004515394 ISSN: 0032-3861 cité dans la demande

## Description

L'invention concerne un procédé de réalisation d'au moins une zone hydrophile sur une surface d'un substrat hydrophobe.

En particulier, le procédé selon l'invention fait appel à une technique de réduction localisée par voie électrochimique, de sorte à former sur la surface d'une pièce des zones hydrophiles entourées de zones hydrophobes.

Les pièces en matériau composite comprenant de telles zones hydrophiles localisées sont destinées à être utilisées notamment pour la réalisation de plots aptes à la reconnaissance chimique, tels que des biopuces (également appelées puces à ADN), ou dans le domaine de la microfluidique, qui concerne les écoulements dans des structures mettant en jeu des dimensions caractéristiques de l'ordre du micromètre, afin d'obtenir des zones de transport de fluides ou de particules (cellules biologiques).

En effet, pour de telles applications, il est nécessaire que la partie hydrophile du substrat, ou partie active, soit bien localisée, et que le reste du substrat soit inerte chimiquement et physiquement, afin de ne pas influer sur les réactions ayant lieu dans la partie active.

Pour les applications considérées, l'utilisation de substrats en matériau polymère s'est récemment développée. En effet, ces substrats offrent, par rapport au silicium ou au verre classiquement utilisés, de nombreux avantages tels qu'une mise en forme aisée, un faible coût., et une bonne biocompatibilité.

On connaît par exemple, du document US 6 221 227, un procédé de fabrication de microstructures présentant des configurations géométriques diverses, dans une pièce comprenant des couches superposées de différents polymères. Ce procédé comprend toutefois un nombre important d'étapes, ce qui rend sa mise en oeuvre complexe.

On connaît par ailleurs la modification locale de substrats formés de polytétrafluoroéthylène, ou PTFE (généralement commercialisé sous la marque Teflon^{®}) par réduction électrochimique. On peut se référer aux publications suivantes : C. Combellas et al., Polymer 44 (2003) 19-24 ; C. Combellas et al., Polymer 45 (2004) 4669-4675 ; C. Combellas et al., J. Phys.Chem. B (2004), 108, 6391-6397.

L'utilisation de la voie électrochimique permet un ajustement aisé des dimensions des zones hydrophiles par choix de l'électrode utilisée, une transposition facile à grande échelle, et présente en outre un faible coût. Par ailleurs, le PTFE offre l'intérêt d'une bonne résistance thermique et d'un faible coût.

Toutefois, ce polymère possède des inconvénients extrêmement gênants pour les applications considérées. En effet, il présente un mauvais état de surface, en particulier un caractère rugueux qui ne peut être amélioré, même par polissage. En outre, il présente un fluage dès 60°C, et il est opaque.

Pour remédier à ces inconvénients, les inventeurs proposent d'utiliser, en tant que substrat hydrophobe, un matériau inerte chimiquement dont une surface est revêtue d'un film hydrophobe de faible épaisseur. Le film est formé de groupements organiques fluorés. Les inventeurs ont déterminé un groupe de composés qui sont des réducteurs suffisamment puissants pour réduire la surface hydrophobe de tels substrats, et qui permettent de faire une réduction localisée.

A cet effet, selon un premier aspect, l'invention propose un procédé de réalisation d'au moins une zone hydrophile sur un substrat qui est constitué par un matériau chimiquement inerte et dont une surface à traiter est revêtue d'un film hydrophobe, ledit film hydrophobe étant constitué par des groupements organiques fluorés, ledit procédé consistant à effectuer une réduction par voie électrochimique de la surface à traiter, et dans lequel :
- la réduction est effectuée dans une cellule électrochimique qui est pourvue d'une électrode réductrice, d'une contre-électrode, et qui contient une solution électrolytique contenant au moins un solvant et un composé précurseur d'un agent réducteur, ledit composé étant choisi de sorte à posséder un potentiel standard inférieur à - 2,7 V par rapport à l'électrode au calomel saturé (ECS) ;
- l'électrode réductrice est placée par rapport à la surface du substrat de telle sorte que ladite surface soit disposée en regard de la surface utile de l'électrode, ladite surface de l'électrode étant l'image de la zone à réduire ;
- l'électrode réductrice est soumise au potentiel de formation de l'agent réducteur.

Par « surface utile de l'électrode », on entend la portion de la surface de contact de l'électrode et de la solution électrolytique sur laquelle se produit la génération du réducteur.

Ce procédé combine l'utilisation de composés particuliers aptes à former en solution des agents fortement réducteurs et l'emploi d'une électrode de géométrie adaptée à la zone à réduire. On peut ainsi obtenir de façon maîtrisée, précise et aisément ajustable une zone hydrophile dépourvue de fluor, dont la géométrie est choisie en fonction de l'application considérée.

La ou les zones hydrophiles obtenues sont bien localisées, car l'agent réducteur est généré au voisinage immédiat de l'électrode. Ces zones hydrophiles sont entourées d'un matériau hydrophobe non seulement durable, mais également inerte chimiquement et physiquement. Ce substrat hydrophobe modifié présente notamment d'excellentes qualités de surface.

Selon une réalisation, le composé précurseur de l'agent réducteur répond à la formule générale P(R¹R²R³), dans laquelle au moins l'un des substituants R¹, R², R³ représente un groupement phényle portant de 1 à 3 substituants, parmi lesquels on peut citer les groupements alkyle comportant de 1 à 6 atomes de carbone, linéaires ou ramifiés, éventuellement substitués. De préférence, R¹, R² et R³ représentent indépendamment les uns des autres un groupement phényle portant de 1 à 3 groupes méthyle. En particulier, le composé précurseur de l'agent réducteur est la tritolylphosphine.

Selon cette réalisation, le composé précurseur est réductible en un radical anion Rad^{.-} qui induit la réduction.

La solution électrolytique comprend de préférence :
- un solvant choisi dans le groupe constitué par le dimé-thylformamide (DMF), le diméthylsulfoxyde (DMSO), l'hexaméthylphosphorotriamide (HMPT), l'hexaméthylphosphoramide (HMPA), un nitrile tel que l'acétonitrile, le tétrahydrofuranne (THF), l'ammoniac, les amines primaires ;
- un sel de type M⁺A⁻ dans lequel M⁺ est un cation non réductible choisi dans le groupe constitué par Li⁺, Na⁺, K⁺, NR₄⁺, R étant un radical alkyle, et dans lequel A⁻ est un anion non réductible choisi dans le groupe constitué par BF₄⁻, B(C₆H₅)₄⁻, CF₃CO₂⁻, PF₆⁻, (EtO)₂PO⁻, NCCHCO₂Et⁻, AcO⁻, SCN⁻, CH₃CH₂CH₂CH(NH₂)-CO₂⁻, ClO₄⁻, Br⁻, Cl⁻, I⁻**,** SO₄²⁻.

Selon une autre réalisation, le composé précurseur de l'agent réducteur est un cation métallique choisi dans le groupe comprenant les cations provenant des métaux alcalins, des métaux alcalino-terreux, du magnésium et de l'aluminium, ledit cation métallique étant apte à induire la formation d'électrons solvatés qui provoquent la réduction. Dans ce cas, la solution électrolytique comprend de préférence un solvant choisi dans le groupe constitué par l'ammoniac, les amines primaires (telles que la méthylamine, l'éthylamine, la propylamine, l'éthylènediamine), l'hexaméthylphosphoramide, un mélange ammoniac / THF ou un mélange d'une amine et du THF.

Les groupements organiques fluorés formant le film hydrophobe sont de préférence choisis dans le groupe constitué par les groupements alkyle fluorés linéaires et les groupements alkyle fluorés ramifiés, les groupements fluoroalkylthiol, les groupements phényle fluorés, et peuvent être des groupements perfluorés. Selon une réalisation, le rapport F / H (atomes de fluor / atomes d'hydrogène) est, avant réduction, supérieur ou égal à 1.

Le matériau formant le substrat est avantageusement choisi dans le groupe constitué par le verre, la silice, le silicium, l'alumine, les oxydes métalliques, les métaux, ou un matériau isolant, par exemple un polycarbonate, recouvert d'un film conducteur ou semi-conducteur. Notamment, l'emploi de matériaux transparents comme le verre permet d'utiliser des types de détection très variés, en particulier optiques.

Selon une réalisation, la surface de l'électrode réductrice en regard de la surface à traiter du substrat est une surface continue. Cette surface peut présenter une forme de disque, de bande, ou bien être un tampon sur lequel est inscrit le motif à graver, c'est-à-dire le motif que l'on souhaite imposer à la zone hydrophile.

Selon une autre réalisation, la surface de l'électrode réductrice en regard de la surface à traiter du substrat est une surface discontinue. Elle peut être formée d'une pluralité de plots, l'extrémité de l'électrode présentant ainsi une forme de brosse.

Lorsque l'électrode présente une surface en forme de disque, il est préférable que la distance entre cette surface de l'électrode et la surface à traiter du substrat soit comprise entre 0 et 2 fois le rayon du disque.

Lorsque l'électrode présente une surface en forme de bande, il est préférable que la distance entre cette surface de l'électrode et la surface à traiter du substrat soit comprise entre 0 et 2 fois la largeur de la bande.

Le procédé selon l'invention permet par conséquent d'obtenir une pièce en matériau composite constituée par un matériau inerte chimiquement portant sur l'une de ses faces un film hydrophobe interrompu par au moins une zone hydrophile dont au moins l'une des dimensions est micrométrique.

Cette pièce peut comprendre au moins une zone hydrophile en forme de disque, le diamètre de ladite zone étant inférieur ou égal à 500 microns. Une telle pièce est obtenue grâce à l'utilisation d'une électrode de type « électrode-disque », le diamètre du disque étant de l'ordre du diamètre de la zone hydrophile obtenue. En variante, cette pièce peut comprendre une pluralité de zones hydrophiles en forme de disque, le diamètre de chaque zone étant inférieur ou égal à 500 microns. Cette pièce est obtenue grâce à l'utilisation d'une électrode à plots multiples. Ces deux types de pièces peuvent être utilisés de façon avantageuse pour la réalisation de biopuces.

En mettant en oeuvre le procédé selon l'invention, on peut également obtenir une pièce comprenant au moins une zone hydrophile en forme de trait, la longueur dudit trait étant de l'ordre de quelques millimètres et l'épaisseur dudit trait étant inférieure ou égale à 500 microns. Une telle pièce peut être utilisée de façon avantageuse pour la réalisation d'un système microfluidique qui comprend, par exemple, au moins un canal formé par ledit trait. En effet, les systèmes microfluidiques tels que les chambres de réaction, les mélangeurs, ou les micro-canaux doivent être inertes chimiquement, ce qui est le cas des pièces obtenues par la mise en oeuvre du procédé de l'invention.

D'autres objets et avantages de l'invention apparaîtront au cours de la description qui suit, faite en référence aux dessins annexés dans lesquels :
- les figures 1a et 1b sont des vues schématiques en coupe d'une cellule électrochimique dans laquelle est mis en oeuvre le procédé selon l'invention, respectivement immédiatement avant et immédiatement après réduction, l'électrode réductrice étant, pendant la réduction, en contact direct avec la surface à traiter du substrat ;
- les figures 2a et 2b sont des vues analogues à la figure 1, dans lesquelles l'électrode réductrice est, pendant la réduction, située au voisinage de la surface à traiter du substrat ;
- la figure 3 est une photographie d'un substrat modifié, dont la surface présente un trait hydrophile ;
- la figure 4 est une photographie d'un substrat modifié, dont la surface présente un trait hydrophile sur lequel de l'eau a été condensée ;
- la figure 5 est une photographie montrant les plots obtenus selon le mode opératoire de l'exemple 1.1. Le substrat est extrait verticalement d'un liquide (partie sombre de la photographie) qui reste ancré sur les plots.

Le procédé selon l'invention est destiné à permettre la formation d'une ou plusieurs zones hydrophiles 1 sur un substrat 2. Ce substrat 2 est constitué d'un matériau chimiquement inerte 3, et présente une surface 4 revêtue d'un film hydrophobe qui est constitué par des groupements organiques fluorés. Cette surface 4 est celle sur laquelle on souhaite créer la ou les zones hydrophiles 1. Dans la suite de la description, cette surface 4 sera désignée par les termes « surface à traiter ».

Le procédé consiste en une réduction électrochimique localisée de la surface à traiter 4, de sorte à réduire certains groupes organiques fluorés situés sur une zone précise.

Ce procédé est mis en oeuvre dans une cellule électrochimique classique 5. Cette cellule 5 est pourvue d'une électrode réductrice 6 , ou électrode « de travail », d'une contre-électrode, et éventuellement d'une électrode de référence.

L'électrode réductrice 6 est typiquement une microélectrode, c'est-à-dire une électrode dont la pointe a une dimension micrométrique. Cette microélectrode 6 est formée d'un métal non réductible aux potentiels considérés comme le platine, l'or, le tungstène ou l'acier inoxydable.

L'électrode 6 possède une surface 7 pouvant présenter des formes diverses, selon la géométrie de la zone hydrophile 1 que l'on souhaite obtenir.

Par exemple, on peut utiliser une électrode 6 dont la surface 7 est continue. Cette surface 7 peut présenter une forme de disque ou de bande, ce qui permet d'obtenir sur le substrat 2 une zone hydrophile 1 unique respectivement en forme de disque, ou en forme de trait. La surface 7 de l'électrode 6 peut également être un tampon sur lequel est inscrit le motif à graver, le motif étant de la forme que l'on souhaite conférer à la zone hydrophile 1 du substrat 2.

On peut également utiliser une électrode 6 dont la surface 7 est discontinue, et par exemple formée d'une pluralité de plots, de sorte à former sur le substrat 2 une pluralité de zones hydrophiles 1 en forme de disque.

La contre-électrode utilisée (non représentée) est formée d'un métal difficilement oxydable, tel que le platine, l'or, le tungstène, ou l'acier inoxydable. Il peut s'agir d'un fil ou d'une grille dont la dimension (la surface dans le cas d'une grille) est très supérieure à celle de l'électrode réductrice 6.

Par exemple, on peut utiliser une électrode réductrice 6 de type disque, de rayon a = 25 µm, avec une contre-électrode formée d'un fil de platine de 1 mm de diamètre et de quelques millimètres de longueur. Un tel dispositif permet de travailler en absence d'électrode de référence.

Le procédé de réduction électrochimique est réalisé sous atmosphère inerte, c'est-à-dire en absence d'oxygène et d'eau.

Dans la cellule, l'électrode réductrice 6 est placée par rapport au substrat 2 de telle sorte que la surface à traiter 4 soit disposée en regard de la surface 7 de l'électrode 6.

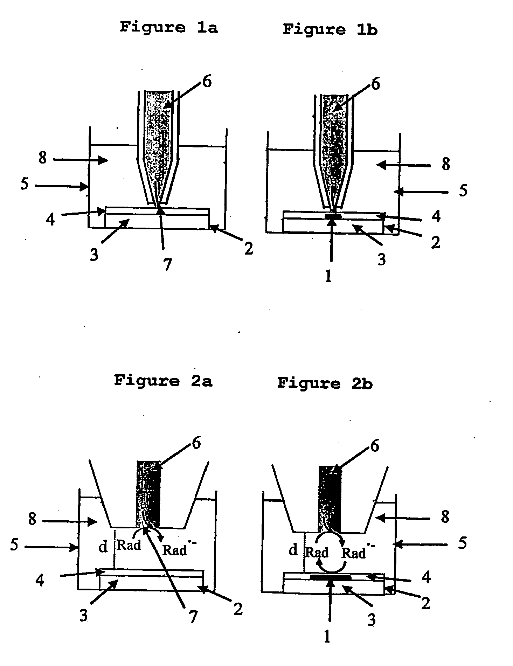

Selon le mode de réalisation représenté sur les figures 1a et 1b, la surface 7 de l'électrode 6 est en contact avec la surface à traiter 4.

Selon le mode de réalisation représenté sur les figures 2a et 2b, la surface 7 de l'électrode 6 est placée au voisinage de la surface à traiter 4, l'expression « au voisinage » signifiant ici à une distance micrométrique.

Pour obtenir la distance souhaitée entre la surface 7 de l'électrode 6 et la surface à traiter 4, on utilise un dispositif adapté permettant de déplacer soit l'électrode 6, soit le substrat 2, d'une distance de quelques micromètres, tout en ajustant le parallélisme entre la surface 7 de l'électrode 6 et la surface à traiter 4. Ce type de dispositif est décrit dans les publications suivantes : C. Combellas et al., J. Phys. Chem., B 108, 2004, 6391-6397, et C. Combellas et al., Anal. Chem. 76, 2004, 3612-3618.

En variante, on peut également utiliser une cellule électrochimique 1 de configuration couche mince, dans laquelle l'électrode 6 et le substrat 2 sont fixes, et sont séparés par un film mince (quelques micromètres d'épaisseur) de solvant. Cette technique permet une approche bien contrôlée et une bonne reproductibilité d'une expérience à l'autre.

La distance (d) séparant la surface 7 de l'électrode 6 et la surface à traiter 4 peut être évaluée par mesure optique, ou en utilisant une sonde électrochimique de distance.

La solution électrolytique 8 qui est introduite dans la cellule 5 remplit au moins l'espace entre la surface 7 de l'électrode 6 et le substrat 2. La contre-électrode, et le cas échéant l'électrode de référence, sont également en contact avec la solution électrolytique 8.

Cette solution 8 contient un solvant approprié, et un composé précurseur d'un agent réducteur, dont le potentiel standard est inférieur à -2,7 Volts, par rapport au système de référence ECS (Electrode au Calomel Saturé).

Pour effectuer la réduction électrochimique, l'électrode 6 est soumise au potentiel de formation de l'agent réducteur, pendant la durée nécessaire à la réduction de la zone 1 du substrat 2 en regard de la surface 7 de l'électrode 6. Cette durée est typiquement de l'ordre de 10 à 100 secondes.

Le fait de soumettre l'électrode 6 à un tel potentiel permet de transformer le composé en l'agent réducteur, qui est donc généré in situ, au voisinage immédiat de la surface 7 de l'électrode 6. Cet agent provoque la réduction des groupes fluorés situés sur la zone 1 en regard de la surface 7 de l'électrode 6.

La réduction se traduit par la coupure de liaisons carbone-fluor, et conduit au remplacement d'atomes de fluor par des atomes d'hydrogène et/ou à l'apparition de doubles et/ou de triples liaisons carbone-carbone qui peuvent ensuite être hydrolysées. Ces nouvelles fonctionnalités confèrent son caractère hydrophile à la zone 1.

Le mécanisme de la réduction est complexe. On montre qu'en solution, des molécules fluorées (C₆F₁₄, C₈F₁₈, C₁₀F₂₂) identiques à l'extrémité terminale des molécules qui sont greffées sur les surfaces sont aussi réduites par le composé réducteur (électron solvaté ou radical anion du composé précurseur P(R¹R²R³)). La réduction conduit à la défluoration des molécules.

Si l'agent réducteur est un radical-anion Rad^{.-}, obtenu au moyen d'une électrode polarisée au potentiel de réduction de Rad selon la réaction (1):

Rad + e⁻ → Rad^{.-}, (1)

la réduction d'une liaison C-F correspond à la réaction (2) :

- [CF-] + Rad^{.-} → - [C^{.}-] + F⁻ + Rad. (2)

Si l'agent réducteur est un électron solvaté, la réduction d'une liaison C-F correspond à la réaction (3) :

- [CF-] + [e⁻] ₛₒₗᵥ → -[C^{.}-] + F⁻ (3)

Lorsque le composé précurseur de l'agent réducteur est un composé apte à former un radical-anion Rad^{.-}, il est possible de fixer soit le potentiel, soit le courant.

Lorsque le composé précurseur est un cation métallique pouvant induire en solution la formation d'électrons solvatés, fixer le courant offre plus de reproductibilité.

Lorsque l'on travaille à potentiel contrôlé, la valeur du potentiel est fixée à une valeur inférieure de l'ordre de 150-200 mV à celle du potentiel de formation de l'agent réducteur. Le courant est alors contrôlé par le transfert de matière à l'électrode 6.

Lorsque l'on travaille à courant contrôlé, la valeur du courant dépend de la concentration de l'agent réducteur que l'on souhaite générer localement. Cette valeur dépend également de la distance (d) entre l'électrode 6 et la surface à traiter 4, et de la dimension (a) de l'électrode.

Par exemple, pour une concentration du composé précurseur de l'agent réducteur de 0,1 M, une électrode-disque de rayon a = 25 µm, et une distance d = 0,7a = 17 µm, un courant de 400 nA doit être appliqué.

Après la réduction, le substrat 2 est récupéré et rincé. On obtient ainsi un substrat 2 dont la surface 4 présente une zone hydrophile 1 défluorée. Les dimensions de cette zone hydrophile 1 sont déterminées par la géométrie de la surface 7 de l'électrode 6, et sont l'image de cette surface 7.

Le procédé peut être mis en oeuvre pour l'obtention d'un système microfluidique, sous la forme d'une pièce, par exemple une plaquette, comprenant au moins un trait hydrophile. Le ou les traits hydrophiles sont gravés sur la surface hydrophobe du substrat au moyen d'une électrode à bande ou d'un tampon sur lequel est inscrit le motif à graver. L'électrode peut être en contact direct avec le substrat, ou elle peut être maintenue à une distance micrométrique de celui-ci.

Selon l'application souhaitée, le canal formé par le trait hydrophile peut être fermé par un couvercle, ou être ouvert, ce qui permet des interventions aisées, par exemple pour des injections ou des prélèvements.

L'analyse en surface des traits peut être réalisée par spectrométrie de masse d'ions secondaires (ToF-SIMS), de sorte à mettre en évidence qualitativement l'effet de la réduction électrochimique. On observe en effet sur le ou les traits une défluoration (spectre des ions positifs) et une teneur plus importante en oxygène et groupements hydroxyle (spectre des ions négatifs).

Par ailleurs, deux types d'approches complémentaires peuvent être adoptées pour tester le confinement d'un liquide sur une zone réduite d'un substrat hydrophobe.

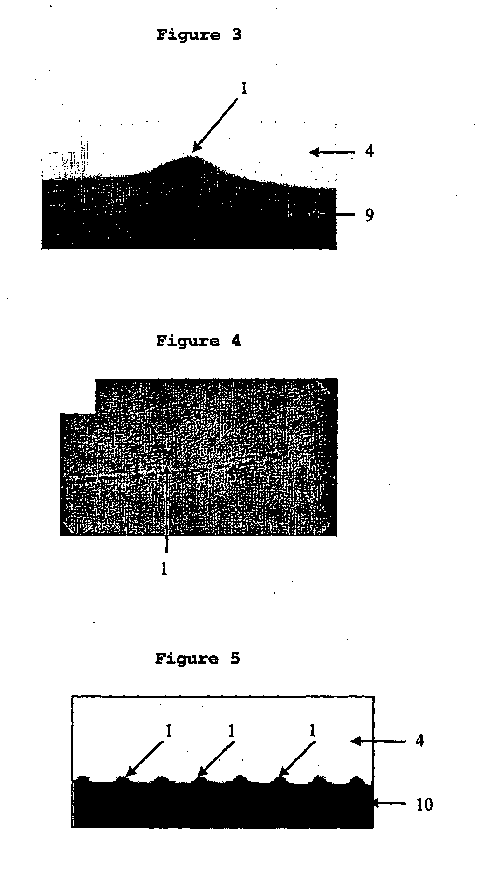

La première approche consiste à plonger quasiment horizontalement dans un liquide polaire un échantillon sur lequel a été gravé un trait hydrophile (voir photographie de la figure 3). La déformation du front de liquide 9 indique la présence du trait hydrophile entouré de la surface hydrophobe. L'étirement du liquide est provoqué par l'augmentation de l'énergie de surface.

La deuxième approche consiste à condenser de l'eau à partir d'air saturé en eau sur une plaque comportant un trait hydrophile, et à analyser l'évolution de la taille des gouttes de condensation au niveau des parties traitée et non traitée.

Cette méthode permet de comprendre le confinement des gouttes à l'intérieur du trait et la possibilité d'obtenir un film continu au niveau de ce trait avec un volume de liquide constant (voir photographie de la figure 4).

Des essais de déplacement d'espèces ont été réalisés sur le film d'eau condensée. A cet effet, une différence de potentiel de 10 Volts a été imposée entre les extrémités d'un trait de condensation de 5 mm de longueur, et une solution saline de chlorure de sodium, de concentration 1 M, a été placée à une extrémité du trait. L'apparition d'un courant électrique de quelques nanoAmpères sur le trait témoigne du déplacement ionique le long du trait.

Le procédé selon l'invention peut également être mis en oeuvre pour l'obtention de biopuces. Dans ce cas, l'électrode utilisée est une électrode disque, ou un réseau d'électrodes disques. On peut aussi prévoir l'utilisation d'une seule électrode comprenant une pluralité de plots.

Les biopuces obtenues sont par exemple destinées à l'immobilisation d'ADN, de protéines ou de cellules vivantes.

Le caractère hydrophobe du support évite l'étalement des gouttes contenant par exemple la solution de synthèse in-situ de l'ADN. Le contraste d'hydrophobie permet de localiser la réaction de synthèse dans le puits hydrophile, et permet ainsi d'augmenter le rendement de la réaction de greffage de l'ADN sur la surface. Il est donc possible de réaliser des plots de faible diamètre (typiquement jusqu'à 10 µm), ce qui permet d'obtenir des biopuces de densité élevée.

De même, pour l'immobilisation de cellules, la taille des plots et le cas échéant des canaux les reliant peut être ajustée aux dimensions des cellules à analyser.

La présente invention est illustrée par les exemples suivants, auxquels elle n'est cependant pas limitée.

### Exemple 1.1

### Tracé de 10 plots hydrophiles sur un substrat de verre

Le substrat est constitué d'un verre greffé par un silane fluoré répondant à la formule (-Si-(CH₂)₂-(CF₂)₆-CF₃).

Le traitement est réalisé dans un sac à gant alimenté en azote. Le substrat fluoré est sous la forme d'un carré de côté égal à 2 cm. On place le substrat au fond d'une cellule électrochimique, dans laquelle on introduit 5 mL de DMF, 0,5 mmol de NBu₄BF₄, 0,25 mmol de tritolylphosphine et un fil de platine (diamètre : 0,25 mm).

On positionne une microélectrode disque en platine (diamètre 25 µm) à une distance de 10 µm au-dessus du substrat fluoré et parallèlement à celui-ci. La microélectrode est asservie à une platine motorisée permettant un déplacement linéaire dans le plan horizontal. On la polarise à - 2,8 Volts/ECS (électrode au calomel saturé) pendant 30 secondes. On coupe le courant, on déplace la microélectrode de 200 µm dans le plan horizontal. On la polarise de nouveau pendant 30 secondes et on répète l'opération encore 8 fois. Puis on retire le substrat, on le rince successivement à l'eau et l'acétone et on le sèche 30 minutes à l'air comprimé. On visualise les plots par accrochage d'un film de liquide polaire 10 (voir figure 5). Le diamètre de chaque plot est de 60 µm, et l'espacement centre à centre est de 200 µm.

### Exemple 2.1

### Tracé d'un trait hydrophile sur un substrat en silicium

Le substrat en silicium est recouvert d'un polymère [(CF₂)ₙ ramifié] généré par plasma sous atmosphère de C₄F₈ selon le procédé décrit dans US 5 501 893.

Le traitement est réalisé dans un sac à gant alimenté en azote. Le substrat fluoré est sous la forme d'un carré de côté égal à 2 cm. On place le substrat au fond d'une cellule électrochimique, dans laquelle on introduit 5 mL de DMF, 0,5 mmol de NBu₄BF₄, 0,25 mmol de tritolylphosphine (précurseur) et un fil de platine (diamètre : 0,25 mm).

On positionne une microélectrode disque en or (diamètre 100 µm) à une distance de 20 µm au-dessus du disque et parallèlement à celui-ci. La microélectrode est asservie à une platine motorisée permettant un déplacement linéaire dans le plan horizontal. Elle est polarisée à -2,8 Volts/ECS et on la déplace parallèlement à la surface à une vitesse de 10 µm/s⁻¹, de façon à obtenir en 1000 secondes un trait de 1 cm de longueur et 250 µm d'épaisseur. On retire le substrat, on le rince successivement à l'eau et l'acétone puis on le sèche 30 minutes dans un four à 50°C. Le trait est visualisable à l'oeil nu car le polymère est décapé au niveau du trait, et on observe l'aspect miroir du silicium.

### Exemple 2.2

On procède selon le même mode opératoire que dans l'exemple 2.1, en utilisant une électrode formée d'une bande d'or de 1 cm de longueur et de 50 µm de largeur. L'électrode est maintenue fixe à une distance de 20 µm de la surface du substrat et est polarisée pendant 30 secondes. On obtient un trait de 1 cm de longueur et 100 µm d'épaisseur.

### Exemple 2.3

On procède selon le même mode opératoire que dans l'exemple 2.1, en utilisant une électrode formée d'un fil de platine fixe (longueur : 2 cm, diamètre : 250 µm) posé sur le substrat et polarisé pendant 30 secondes. On obtient un trait de 2 cm de longueur et 500 µm d'épaisseur.

### Exemple 2.4

On procède selon le même mode opératoire que dans l'exemple 2.1 avec une électrode-disque de platine de diamètre 25 µm positionnée à 8 µm du substrat.

Le substrat est une plaque de silicium silanisée par réaction avec Cl₃Si- (CH₂)₂- (CF₂)₇-CF, par adsorption et réaction d'alkyltrichlorosilane sur un substrat (Si/SiO₂), selon les conditions expérimentales décrites dans la publication suivante : S. R. Wasserman, Y.-T. Tao, G. M. Whitesides Langmuir, 1989, 5, 1074-1087.

On obtient un trait de 1 cm de longueur et 50 µm d'épaisseur.

### Exemple 2.5

On procède selon le même mode opératoire que dans l'exemple 2.1 avec une électrode disque de platine de diamètre 50 µm positionnée à 15 µm du substrat.

Le substrat est une plaque de verre recouverte d'une couche conductrice d'oxyde métallique tel que de l'ITO (Indium Tin Oxide). Ce substrat est silanisé par réaction avec Cl₃Si-(CH₂)₂-(CF₂)₇-CF₃ selon les conditions expérimentales de l'exemple 2.4 (silanisation en phase liquide) ou celles (en phase gaz) décrites dans la publication suivante : A. Hozumi, K. Ushiyama, H. Sugimura, O. Takai Langmuir, 1999, 15, 7600-7604.

La solution électrolytique utilisée pour la réduction de surface est l'éthylènediamine contenant 0,2 M de LiBF₄. L'électrode-disque de platine est polarisée à un potentiel de - 3 V par rapport au système Ag/AgCl pour générer localement des électrons solvatés. L'électrode est déplacée à une vitesse de 10 µm/s afin d'obtenir un trait de 8 mm de longueur et 150 µm d'épaisseur.

### Exemple 2.6

On procède selon le même mode opératoire que dans l'exemple 2.4.

Le substrat est une plaque d'or greffée par des groupements organiques fluorés dérivés de sels de diazonium (voir la publication : Covalent Modification of Iron Surfaces by Electrochemical Reduction of Aryldiazonium Salts. A. Adenier, M. C. Bernard, B. Desbat, E. Cabet-Deliry, M. M. Chehimi, O. Fagebaume, J. Pinson and F. Podvorica, J. Am. Chem. Soc. 2001, 123, 4541 - 4549.).

On obtient un trait de 5 mm de longueur et 50 µm d'épaisseur.

### Exemple 2.7

On procède selon le même mode opératoire que dans l'exemple 2.4.

Le substrat est une plaque d'or sur laquelle une couche de thiols fluorés (HS-(CH₂)₂-(CF₂)ₙ-CF₃ avec n = 6, 8) est auto-assemblée, obtenue selon les conditions expérimentales décrites dans la publication suivante : C.D. Bain et al., J. Am. Chem. Soc 1989, 111, 321.

On obtient un trait de 5 mm de longueur et 50 µm d'épaisseur.

### Exemple 2.8

On procède selon le même mode opératoire que dans l'exemple 2.1. Le substrat est une plaque de verre texturée par des picots (côté environ 300 nm, hauteur environ 100 nm, espacement environ 1 micron) et fluorée -Si(CH₃)₂-(CH₂)₂-(CF₂)₆-CF₃ afin de lui conférer des propriétés superhydrophobes.

On obtient un trait de 1 cm de longueur et 200 µm d'épaisseur.

### Exemple 3

On exalte la différence d'hydrophobie en traitant les surfaces modifiées par une solution constituée d'un mélange de H₂O₂/H₂SO₄ 30/70 pendant 1 à 10 minutes.

L'angle de contact d'une goutte d'eau sur la surface de verre fluorée passe de 106 à 96°. L'angle de contact d'une goutte d'eau sur la surface de verre fluorée réduite passe de 76 à 30°.

### Exemple 4

Les angles de contact de trois liquides : eau, décanol polaire,et tricrésylphosphate (TCP) sont mesurés sur deux types de substrats hydrophobes modifiés. Le premier substrat est formé d'un verre hydrophobe silanisé par un silane porteur du groupe (CH₂)₂(CF₂)₆CF₃. Le second substrat est formé d'un verre « superhydrophobe » dont la composition chimique est identique à celle du verre hydrophobe décrit ci-dessus. La seule différence est que ce second substrat est texturé par des picots (côté environ 300 nm, hauteur environ 100 nm, espacement environ 1 micron), ce qui lui confère des propriétés superhydrophobes.

Les résultats obtenus sur des échantillons témoins, et sur des échantillons réduits par du sodium dans l'ammoniac liquide sont reportés dans le tableau 1 ci-dessous :

**Tableau 1**

| Type de substrat hydrophobe | Verre superhydrophobe | | Verre hydrophobe | | |
|---|---|---|---|---|---|
| Type de liquide | TCP | Eau | Décanol | TCP | Eau |
| Angles sur échantillons témoins | 108° | 143° | 66° | 78° | 110° |
| Angles sur échantillons réduits | 27° | 55° | 32° | 36° | 76° |

Les résultats obtenus illustrent bien le fait que le traitement réducteur provoque une diminution importante des angles de contact, et par conséquent une augmentation du caractère hydrophile des échantillons lorsqu'ils ont subi la réduction électrochimique.

## Revendications

1. Procédé de réalisation d'au moins une zone hydrophile (1) sur un substrat (2) qui est constitué par un matériau chimiquement inerte (3) et dont une surface à traiter (4) est revêtue d'un film hydrophobe, ledit film hydrophobe étant constitué par des groupements organiques fluorés, **caractérisé en ce qu'**il consiste à effectuer une réduction par voie électrochimique de la surface à traiter (4) et **en ce que** :
- la réduction est effectuée dans une cellule électrochimique (5) qui est pourvue d'une électrode réductrice (6) et d'une contre-électrode, et qui contient une solution électrolytique (8) contenant au moins un solvant et un composé précurseur d'un agent réducteur, ledit composé étant choisi de sorte à posséder un potentiel standard inférieur à - 2,7 V par rapport à l'électrode au calomel saturé (ECS) ;
- l'électrode réductrice (6) est placée par rapport à la surface (4) du substrat de telle sorte que ladite surface (4) soit disposée en regard de la surface utile (7) de l'électrode (6), ladite surface (7) de l'électrode (6) étant l'image de la zone à réduire ;
- l'électrode réductrice (6) est soumise au potentiel de formation de l'agent réducteur.

2. Procédé selon la revendication 1, **caractérisé en ce que** le composé précurseur de l'agent réducteur répond à la formule générale P(R¹R²R³), dans laquelle au moins l'un des radicaux R¹, R², R³ représente un groupement phényle portant de 1 à 3 substituants, ledit composé étant apte à former un radical-anion.

3. Procédé selon la revendication 2, **caractérisé en ce que** les substituants des radicaux R¹, R², R³ sont des groupements alkyle comportant de 1 à 6 atomes de carbone, linéaires ou ramifiés, éventuellement substitués.

4. Procédé selon la revendication 2 ou 3, **caractérisé en ce que** R¹, R² et R³ représentent indépendamment les uns des autres un groupement phényle portant de 1 à 3 groupes méthyle.

5. Procédé selon la revendication 4, **caractérisé en ce que** le composé précurseur de l'agent réducteur est la tritolylphosphine.

6. Procédé selon l'une quelconque des revendications 2 à 5, **caractérisé en ce que** la solution électrolytique (8) comprend :
- un solvant choisi dans le groupe constitué par le diméthylformamide (DMF), le diméthylsulfoxyde (DMSO), l'hexaméthylphosphorotriamide (HMPT), l'hexaméthylphosphoramide (HMPA), un nitrile tel que l'acétonitrile, le tétrahydrofuranne (THF), l'ammoniac, les amines primaires, et ;
- un sel de type M⁺A⁻ dans lequel M⁺ est un cation non réductible choisi dans le groupe constitué par Li⁺, Na⁺, K⁺, NR₄⁺, R étant un radical alkyle, et dans lequel A⁻ est un anion non réductible choisi dans le groupe constitué par BF₄⁻, B(C₆H₅)₄⁻, CF₃CO₂⁻, PF₆⁻, (EtO)₂PO⁻, NCCHCO₂Et⁻, AcO⁻, SCN⁻, CH₃CH₂CH₂CH(NH₂)CO₂⁻, ClO₄⁻, Br⁻, Cl⁻, I⁻, SO₄²⁻.

7. Procédé selon la revendication 1, **caractérisé en ce que** le composé précurseur de l'agent réducteur est un cation métallique choisi dans le groupe comprenant les cations provenant des métaux alcalins, des métaux alcalino-terreux, du magnésium et de l'aluminium, ledit cation métallique étant apte à induire la formation d'électrons solvatés.

8. Procédé selon la revendication 7, **caractérisé en ce que** la solution électrolytique (8) comprend un solvant choisi dans le groupe constitué par l'ammoniac, les amines primaires (telles que la méthylamine, l'éthylamine, la propylamine, l'éthylènediamine), l'hexaméthylphosphoramide, ou un mélange ammoniac/tétrahydrofuranne (THF).

9. Procédé selon l'une quelconque des revendications 1 à 8, **caractérisé en ce que** les groupements organiques fluorés sont choisis dans le groupe constitué par les groupes alkyle fluorés linéaires, les groupes alkyle fluorés ramifiés, les groupes fluoroalkylthiol, les groupes phényle fluorés.

10. Procédé selon la revendication 9, **caractérisé en ce que** les groupements organiques fluorés sont des groupements perfluorés.

11. Procédé selon l'une quelconque des revendications 1 à 10, **caractérisé en ce que**, dans les groupements organiques fluorés constituant le film hydrophobe, le rapport F/H est supérieur ou égal à 1 avant réduction.

12. Procédé selon l'une quelconque des revendications 1 à 11, **caractérisé en ce que** le matériau chimiquement inerte (3) formant le substrat (2) est choisi dans le groupe constitué par le verre, la silice, le silicium, l'alumine, les oxydes métalliques, les métaux, ou un matériau isolant, par exemple un polycarbonate, recouvert d'un film conducteur ou semi-conducteur.

13. Procédé selon l'une quelconque des revendications 1 à 12, **caractérisé en ce que** la surface (7) de l'électrode réductrice (6) est une surface continue.

14. Procédé selon la revendication 13, **caractérisé en ce que** la surface (7) de l'électrode réductrice (6) présente une forme de disque.

15. Procédé selon la revendication 13, **caractérisé en ce que** la surface (7) de l'électrode réductrice (6) présente une forme de bande.

16. Procédé selon la revendication 13, **caractérisé en ce que** la surface (7) de l'électrode réductrice (6) est un tampon sur lequel est inscrit le motif à graver.

17. Procédé selon l'une quelconque des revendications 1 à 12, **caractérisé en ce que** la surface (7) de l'électrode réductrice (6) est une surface discontinue.

18. Procédé selon la revendication 17, **caractérisé en ce que** la surface (7) de l'électrode réductrice (6) est formée d'une pluralité de plots.

19. Procédé selon la revendication 14, **caractérisé en ce que** la distance entre la surface (7) de l'électrode réductrice (6) et la surface à traiter (4) est comprise entre 0 et 2 fois le rayon du disque.

20. Procédé selon la revendication 15, **caractérisé en ce que** la distance entre la surface (7) de l'électrode réductrice (6) et la surface à traiter (4) est comprise entre 0 et 2 fois la largeur de la bande.

## Claims

1. A method for producing at least one hydrophilic area (1) on a substrate (2) which consists of a chemically inert material (3) and of which one surface to be treated (4) is coated with a hydrophobic film, said hydrophobic film consisting of fluorinated organic groups, **characterized in that** it consists in performing an electrochemical reduction of the surface to be treated (4) and **in that**:
- the reduction is performed in an electrochemical cell (5) which is equipped with a reducing electrode (6) and a counterelectrode, and which contains an electrolytic solution (8) containing at least one solvent and a compound that is a precursor of a reducing agent, said compound being chosen so as to have a standard potential of less than - 2.7 V relative to the saturated calomel electrode (SCE);
- the reducing electrode (6) is placed, relative to the surface (4) of the substrate, such that said surface (4) is facing the usable surface (7) of the electrode (6), said surface (7) of the electrode (6) being the image of the area to be reduced;
- the reducing electrode (6) is subjected to the formation potential of the reducing agent.

2. The method as claimed in claim 1, **characterized in that** the compound that is a precursor of the reducing agent corresponds to the general formula P(R¹R²R³), in which at least one of the radicals R¹, R² and R³ represents a phenyl group bearing from 1 to 3 substituents, said compound being capable of forming an anion radical.

3. The method as claimed in claim 2, **characterized in that** the substituents of the radicals R¹, R² and R³ are optionally substituted, linear or branched alkyl groups containing from 1 to 6 carbon atoms.

4. The method as claimed in claim 2 or 3, **characterized in that** R¹, R² and R³ represent, independently of one another, a phenyl group bearing from 1 to 3 methyl groups.

5. The method as claimed in claim 4, **characterized in that** the compound that is a precursor of the reducing agent is tritolylphosphine.

6. The method as claimed in any one of claims 2 to 5, **characterized in that** the electrolytic solution (8) comprises:
- a solvent chosen from the group consisting of dimethylformamide (DMF), dimethyl sulfoxide (DMSO), hexamethylphosphorotriamide (HMPT), hexamethylphosphoramide (HMPA), a nitrile such as acetonitrile, tetrahydrofuran (THF), ammonia and primary amines, and;
- a salt of M⁺A⁻ type in which M⁺ is a nonreducible cation chosen from the group consisting of Li⁺, Na⁺, K⁺ and NR₄⁺, R being an alkyl radical, and in which A⁻ is a nonreducible anion chosen from the group consisting of BF₄⁻, B(C₆H₅)₄⁻, CF₃CO₂⁻, PF₆⁻, (EtO)₂PO⁻, NCCHCO₂Et⁻, AcO⁻, SCN⁻, CH₃CH₂CH₂CH(NH₂)CO₂⁻, ClO₄⁻, Br⁻, Cl⁻, I⁻ and SO₄²⁻.

7. The method as claimed in claim 1, **characterized in that** the compound that is a precursor of the reducing agent is a metal cation chosen from the group comprising the cations originating from the alkali metals, the alkaline earth metals, magnesium and aluminum, said metal cation being capable of inducing the formation of solvated electrons.

8. The method as claimed in claim 7, **characterized in that** the electrolytic solution (8) comprises a solvent chosen from the group consisting of ammonia, primary amines (such as methylamine, ethylamine, propylamine or ethylenediamine), hexamethylphosphoramide or an ammonia/ tetrahydrofuran (THF) mixture.

9. The method as claimed in any one of claims 1 to 8, **characterized in that** the fluorinated organic groups are chosen from the group consisting of linear fluoroalkyl groups, branched fluoroalkyl groups, fluoroalkylthiol groups and fluorophenyl groups.

10. The method as claimed in claim 9, **characterized in that** the fluorinated organic groups are perfluoro groups.

11. The method as claimed in any one of claims 1 to 10, **characterized in that**, in the fluorinated organic groups constituting the hydrophobic film, the F/H ratio is greater than or equal to 1 before reduction.

12. The method as claimed in any one of claims 1 to 11, **characterized in that** the chemically inert material (3) forming the substrate (2) is chosen from the group consisting of glass, silica, silicon, alumina, metal oxides, metals, or an insulating material, for example a polycarbonate, coated with a conductive or semiconductive film.

13. The method as claimed in any one of claims 1 to 12, **characterized in that** the surface (7) of the reducing electrode (6) is a continuous surface.

14. The method as claimed in claim 13, **characterized in that** the surface (7) of the reducing electrode (6) is in the shape of a disk.

15. The method as claimed in claim 13, **characterized in that** the surface (7) of the reducing electrode (6) is in the shape of a band.

16. The method as claimed in claim 13, **characterized in that** the surface (7) of the reducing electrode (6) is a pad on which is inscribed the pattern to be etched.

17. The method as claimed in any one of claims 1 to 12, **characterized in that** the surface (7) of the reducing electrode (6) is a discontinuous surface.

18. The method as claimed in claim 17, **characterized in that** the surface (7) of the reducing electrode (6) is made up of a plurality of points.

19. The method as claimed in claim 14, **characterized in that** the distance between the surface (7) of the reducing electrode (6) and the surface to be treated (4) is between 0 and 2 times the radius of the disk.

20. The method as claimed in claim 15, **characterized in that** the distance between the surface (7) of the reducing electrode (6) and the surface to be treated (4) is between 0 and 2 times the width of the band.

## Patentansprüche

1. Verfahren zur Erzeugung zumindest eines hydrophilen Bereichs (1) auf einem Substrat (2), das aus einem chemisch inerten Material (3) besteht und dessen eine Oberfläche (4), die behandelt werden soll, mit einem hydrophoben Film beschichtet ist, wobei der hydrophobe Film aus organischen fluorierten Gruppen besteht, **dadurch gekennzeichnet, dass** das Verfahren in der Durchführung einer elektrochemischen Reduktion der zu behandelnden Oberfläche (4) besteht und dass:
- die Reduktion in einer elektrochemischen Zelle (5) erfolgt, die mit einer Reduktionselektrode (6) und einer Gegenelektrode ausgestattet ist und die eine Elektrolytlösung (8) enthält, die zumindest ein Lösungsmittel und eine Vorläuferverbindung eines Reduktionsmittels enthält, wobei diese Verbindung so ausgewählt wird, dass sie ein Standardpotenzial von weniger als -2,7 V in Bezug auf die gesättigte Kalomelelektrode (GKE) aufweist;
- die Reduktionselektrode (6) in Bezug auf die Oberfläche (4) des Substrats so angeordnet wird, dass die Oberfläche (4) gegenüber der wirksamen Oberfläche (7) der Elektrode (6) angeordnet ist, wobei diese Oberfläche (7) der Elektrode (6) das Abbild des zu reduzierenden Bereichs darstellt;
- die Reduktionselektrode (6) dem Potenzial ausgesetzt wird, bei dem sich das Reduktionsmittel bildet.

2. Verfahren nach Anspruch 1, **dadurch gekennzeichnet, dass** die Vorläuferverbindung des Reduktionsmittels die allgemeine Formel P(R¹R²R³) hat, worin zumindest einer der Reste R¹, R², R³ für eine Phenylgruppe mit 1 bis 3 Substituenten steht, wobei die Verbindung zur Bildung eines Radikalanions geeignet ist.

3. Verfahren nach Anspruch 2, **dadurch gekennzeichnet, dass** die Substituenten der Reste R¹, R², R³ unverzweigte oder verzweigte, gegebenenfalls substituierte Alkylgruppen mit 1 bis 6 Kohlenstoffatomen sind.

4. Verfahren nach Anspruch 2 oder 3, **dadurch gekennzeichnet, dass** R¹, R² und R³ unabhängig voneinander für eine Phenylgruppe mit 1 bis 3 Methylgruppen stehen.

5. Verfahren nach Anspruch 4, **dadurch gekennzeichnet, dass** die Vorläuferverbindung des Reduktionsmittels Tritolylphosphin ist.

6. Verfahren nach einem der Ansprüche 2 bis 5, **dadurch gekennzeichnet, dass** die Elektrolytlösung (8) Folgendes umfasst:
- ein aus der aus Dimethylformamid (DMF), Dimethylsulfoxid (DMSO), Hexamethylphosphortriamid (HMPT), Hexamethylphosphoramid (HMPA), einem Nitril, wie z.B. Acetonitril, Tetrahydrofuran (THF), Ammoniak und primären Aminen bestehenden Gruppe ausgewähltes Lösungsmittel;
- ein Salz vom Typ M⁺A⁻, worin M⁺ ein nicht reduzierbares Kation ist, das aus der aus Li⁺, Na⁺, K⁺, NR₄⁺, worin R ein Alkylrest ist, bestehenden Gruppe ausgewählt ist, und worin A⁻ ein nicht reduzierbares Anion ist, das aus der aus BF₄⁻, B(C₆H₅)₄⁻, CF₃CO₂⁻, PF₆⁻, (EtO)₂PO⁻, NCCHCO₂Et⁻, AcO⁻, SCN⁻, CH₃CH₂CH₂CH(NH₂)CO₂⁻, ClO₄⁻, Br⁻, Cl⁻, I⁻, SO₄²⁻ bestehenden Gruppe ausgewählt ist.

7. Verfahren nach Anspruch 1, **dadurch gekennzeichnet, dass** die Vorläuferverbindung des Reduktionsmittels ein Metallkation ist, das aus der Alkalimetall-, Erdalkalimetall-, Magnesium- und Aluminiumkationen umfassenden Gruppe ausgewählt ist, wobei das Metallkation geeignet ist, um die Bildung von solvatisierten Elektronen zu induzieren.

8. Verfahren nach Anspruch 7, **dadurch gekennzeichnet, dass** die Elektrolytlösung (8) ein aus der aus Ammoniak, primären Aminen (wie z.B. Methylamin, Ethylamin, Propylamin, Ethylendiamin), Hexamethylphosphoramid und einem Gemisch aus Ammoniak und Tetrahydrofuran (THF) bestehenden Gruppe ausgewähltes Lösungsmittel umfasst.

9. Verfahren nach einem der Ansprüche 1 bis 8, **dadurch gekennzeichnet, dass** die organischen fluorierten Gruppen aus der aus unverzweigten fluorierten Alkylgruppen, verzweigten fluorierten Alkylgruppen, Fluorthioalkylgruppen und fluorierten Phenylgruppen bestehenden Gruppe ausgewählt sind.

10. Verfahren nach Anspruch 9, **dadurch gekennzeichnet, dass** die fluorierten organischen Gruppen perfluorierte Gruppen sind.

11. Verfahren nach einem der Ansprüche 1 bis 10, **dadurch gekennzeichnet, dass** das Verhältnis F/H in den fluorierten organischen Gruppen, die den hydrophoben Film bilden, vor der Reduktion 1 oder mehr beträgt.

12. Verfahren nach einem der Ansprüche 1 bis 11, **dadurch gekennzeichnet, dass** das chemisch inerte Material (3), das das Substrat (2) bildet, aus der aus Glas, Silica, Silicium, Aluminiumoxid, Metalloxiden, Metallen oder einem mit einem Leiter- oder Halbleiterfilm beschichteten isolierenden Material, wie z.B. Polycarbonat, bestehenden Gruppe ausgewählt ist.

13. Verfahren nach einem der Ansprüche 1 bis 12, **dadurch gekennzeichnet, dass** die Oberfläche (7) der Reduktionselektrode (6) eine kontinuierliche Oberfläche ist.

14. Verfahren nach Anspruch 13, **dadurch gekennzeichnet, dass** die Oberfläche (7) der Reduktionselektrode (6) scheibenförmig ist.

15. Verfahren nach Anspruch 13, **dadurch gekennzeichnet, dass** die Oberfläche (7) der Reduktionselektrode (6) streifenförmig ist.

16. Verfahren nach Anspruch 13, **dadurch gekennzeichnet, dass** die Oberfläche (7) der Reduktionselektrode (6) ein Stöpsel ist, auf dem das einzugravierende Motiv dargestellt ist.

17. Verfahren nach einem der Ansprüche 1 bis 12, **dadurch gekennzeichnet, dass** die Oberfläche (7) der Reduktionselektrode (6) eine diskontinuierliche Oberfläche ist.

18. Verfahren nach Anspruch 17, **dadurch gekennzeichnet, dass** die Oberfläche (7) der Reduktionselektrode (6) aus einer Vielzahl von Kontakten besteht.

19. Verfahren nach Anspruch 14, **dadurch gekennzeichnet, dass** der Abstand zwischen der Oberfläche (7) der Reduktionselektrode (6) und der zu behandelnden Oberfläche (4) zwischen dem Null- und Zweifachen des Radius der Scheibe liegt.

20. Verfahren nach Anspruch 15, **dadurch gekennzeichnet, dass** der Abstand zwischen der Oberfläche (7) der Reduktionselektrode (6) und der zu behandelnden Oberfläche (4) zwischen dem Null- und Zweifachen der Breite des Streifens liegt.
